(19) Europäisches Patentamt
European Patent Office
Office européen des brevets

(11) Veröffentlichungsnummer: **0 582 221 A1**

(12) **EUROPÄISCHE PATENTANMELDUNG**

(21) Anmeldenummer: **93112158.6**

(22) Anmeldetag: **29.07.93**

(51) Int. Cl.$^5$: **B32B 27/28**, B32B 27/30, G02B 1/10, G02F 1/35, G02F 2/02

(30) Priorität: **06.08.92 DE 4225962**

(43) Veröffentlichungstag der Anmeldung: **09.02.94 Patentblatt 94/06**

(84) Benannte Vertragsstaaten: **DE FR GB IT NL**

(71) Anmelder: **HOECHST AKTIENGESELLSCHAFT**
**Brüningstrasse 50**
**D-65929 Frankfurt am Main(DE)**

(72) Erfinder: **Hickel, Werner Dr.**
**Pfalzgrafenstrasse 65**
**D-67061 Ludwigshafen(DE)**
Erfinder: **Schindler, Thomas**
**Mozartstrasse 42**
**D-65812 Bad Soden am Ts(DE)**
Erfinder: **Meer, Hans-Ulrich ter Dr.**
**Fuchshohl 80**
**D-60431 Frankfurt am Main(DE)**

(54) **Schichtelement und Verfahren seiner Herstellung.**

(57) Ein Schichtelement trägt auf einem Schichtträger mindestens eine monomolekulare regelmäßig angeordnete Schicht, die ein Fulleren und eine polymere amphiphile Verbindung, insbesondere ein Polymethacrylsäureester-Derivat, enthält. Es ist geeignet für Zwecke der nicht-linearen Optik.

Fig. 1

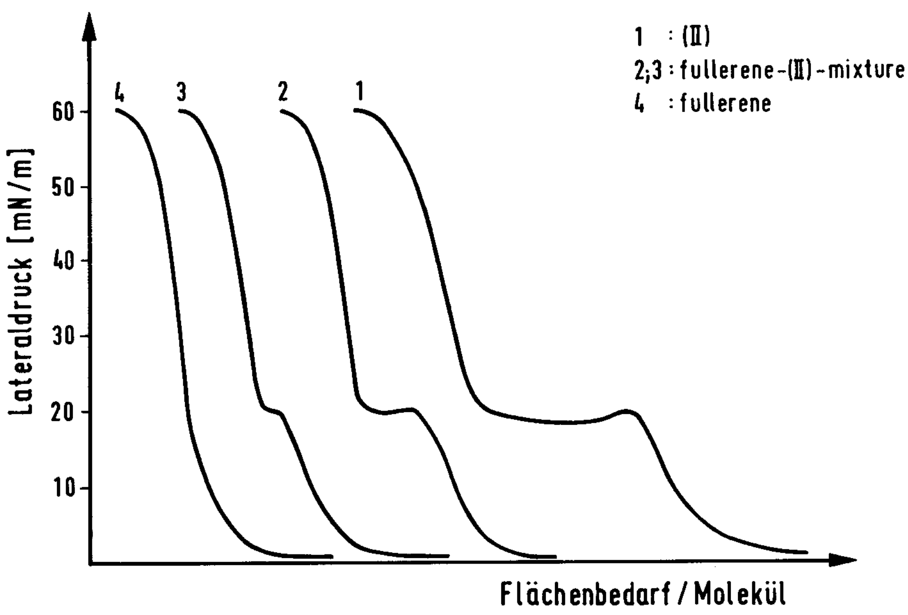


EP 0 582 221 A1

Die vorliegende Erfindung betrifft ein Schichtelement, das mindestens eine monomolekulare regelmäßig angeordnete Schicht eines amphiphilen Moleküls sowie ein Fulleren enthält und ein Verfahren zur Herstellung dieses Schichtelements unter Verwendung der Übertragungsmethode nach Langmuir-Blodgett. Diese Methode wird beispielsweise beschrieben in der europäischen Anmeldung 0 432 619 und in US-PS 4.772.856.

Es ist bereits bekannt, daß $C_{60}$-Fulleren starre Filme an Wasser-Luftgrenzflächen bildet. Diese Filme können nicht, wie bei der Langmuir-Blodgett-Technik üblich, auf ein senkrecht eingetauchtes Substrat übertragen werden. Wahrscheinlich bilden sich auf der Wasseroberfläche mindestens teilweise Multilagen aus. Das Übertragungsverhalten von Fulleren-LB-Filmen wird verbessert, wenn man das Fulleren mit der amphiphilen Verbindung Icosansäure vermischt (Takayoshi Nakamura et al, Langmuir 1992, Vol. 8, Nr.1). Leider ist die Menge an Fulleren, die sich in die monomolekulare Schicht einarbeiten läßt, nach eigenen Versuchen mit Omega-Tricosensäure auf etwa 50 Gew.-% begrenzt und die thermische Beständigkeit der so erzeugten Filme gering. Fullerene besitzen aufgrund ihrer stark delokalisierten Elektronensysteme ähnliche nicht-linear optische Eigenschaften wie konjugierte Polymere. Sie besitzen hohe $\chi(3)$-Werte, die sie für Geräte zur optischen Frequenz-Verdreifachung prädestinieren. Für Fulleren enthaltende LB-Schichten gilt dies um so mehr, je höher der Gehalt an Fulleren ist. Eine gewisse thermische Mindest-Beständigkeit der Schichten ist Voraussetzung für einen breiteren Einsatz.

Es bestand daher die Aufgabe, ein Verfahren anzugeben, mit dem sich der Gehalt an Fullerenen in einer LB-Schicht erhöhen und mit dem sich die thermische Beständigkeit solcher Schichtsysteme verbessern läßt.

Es wurde nun ein Verfahren zur Herstellung eines Schichtelements gefunden, bei dem man ein Gemisch aus einem Fulleren und einer amphiphilen Verbindung auf einer Wasseroberfläche spreitet und nach dem Verfahren von Langmuir-Blodgett auf einen Schichtträger überträgt. Dieses Verfahren ist dadurch gekennzeichnet, daß man als amphiphile Verbindung eine polymere Verbindung einsetzt, beispielsweise Polyglutamat und Trimethylsilylcellulose. Vorzugsweise leitet sich das eingesetzte amphiphile Polymethacrylsäure-Derivat ab von einem monomeren Methacrylsäureester der allgemeine Formel I

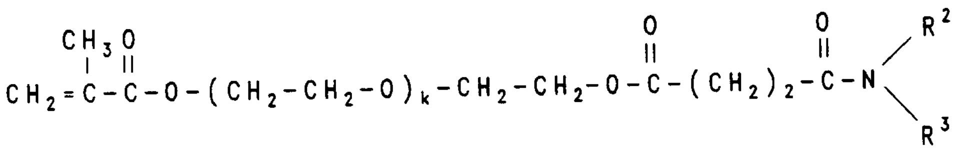

(I)

wobei

k eine ganze Zahl von 0 bis 10 ist,

$R^2$ eine $C_1$-$C_{24}$-Alkylgruppe und

$R^3$ eine $C_8$-$C_{24}$-Alkylgruppe ist, mit der Maßgabe, daß die Gruppen $R^2$ und $R^3$ eine unterschiedliche Anzahl von C-Atomen enthalten.

Vorzugsweise enthält das eingesetzte Gemisch aus Fulleren und amphiphilen Polymeren mindestens 10 Gew.-%, insbesondere mindestens 40 Gew.-% Fulleren. Bei den Polymeren, die sich von den Monomeren der Formel I ableiten, werden vorzugsweise 55-70 Gew.-% Fulleren zur Herstellung der Mischung aus amphiphilen Polymer und Fulleren verwendet, so daß auch die monomolekularen Schichten des Schichtelements mindestens teilweise 55-70 Gew.-% Fulleren (Rest polymere amphiphile Verbindung) enthalten. Als Fulleren kann man die Verbindung $C_{60}$ und/oder die Verbindung $C_{70}$ einsetzen.

Die Erfindung betrifft ferner ein Schichtelement, das mindestens eine monomolekulare, regelmäßig angeordnete Schicht aus einem amphiphilen Molekül mit einem Gehalt an Fulleren auf einem festen Träger für Schichtelemente enthält. Die Zusammensetzung einer monomolekularen Schicht des Schichtelements entspricht der Zusammensetzung des zu ihrer Herstellung verwendeten Gemisches aus Fulleren und polymeren amphiphiler Verbindung. Das erfindungsgemäße Schichtelement zeichnet sich dadurch aus, daß das amphiphile Molekül eine polymere Verbindung, insbesondere ein Polymethacrylsäureester-Derivat darstellt, vorzugsweise ein Polymer, das durch Polymerisation von I entsteht. Bei Gehalten von mindestens 50 % Fulleren eignet sich das Schichtelement zur optischen Frequenzverdreifachung. Mit zunehmender Fullerenkonzentration steigt $\chi(3)$, und zwar stärker als linear. Ein hohes $\chi(3)$ ist für optische Anwendungen wünschenswert. Entsprechende Schichtelemente erhalten vorzugsweise mindestens zwei monomolekulare Fulleren enthaltende Schichten. Bevorzugt sind mindestens 50 Fulleren enthaltende Schichten, vorzugsweise 100 - 200 solcher Schichten. Als Schichtträger kommen beliebige feste, vorzugsweise dimensionsstabile Substrate aus unterschiedlichen Materialien in Betracht. Die als Schichtträger dienenden Substrate können

beispielsweise transparent oder lichtundurchlässig, elektrisch leitend oder isolierend sein. Das Substrat kann hydrophob oder hydrophil sein. Die Oberfläche des Substrats, auf die die LB-Schicht aufgebracht wird, kann hydrophobiert sein. Die zu beschichtende Oberfläche des Substrats sollte möglichst rein sein, damit die Ausbildung einer dünnen, geordneten Schicht nicht gestört wird. Insbesondere die Anwesenheit von oberflächenaktiven Stoffen auf der zu beschichtenden Oberfläche der Substrate kann die Schichtherstellung beeinträchtigen. Es ist möglich, die als Schichtträger dienenden Substrate auf der zu beschichtenden Oberfläche vor dem Aufbringen der LB-Filme zunächst mit einer Zwischenschicht zu versehen, um z. B. die Haftung des Filmes auf dem Substrat zu verbessern.

Als Material für die Substrate können beispielsweise Metalle, wie etwa Gold, Platin, Nickel, Palladium, Aluminium, Chrom, Niob, Tantal, Titan, Stahl und dergleichen verwendet werden. Andere geeignete Materialien für die Substrate sind Kunststoffe, wie beispielsweise Polyester, etwa Polyethylenterephthalat oder Polybutylenterephthalat, Polyvinylchlorid, Polyvinylidenchlorid, Polytetrafluorethylen, Polyethylen oder Polypropylen.

Gleichermaßen kommen auch Halbleiter, wie Silizium oder Germanium, Glas, Siliziumdioxid, keramische Werkstoffe oder Celluloseprodukte für die Substrate in Betracht. Die Oberfläche von Glas und anderen hydrophilen Substraten kann, sofern erforderlich, in an sich bekannter Weise, beispielsweise durch Umsetzung mit Alkylsilanen oder Hexamethyldisilazan, hydrophobiert werden. Die Auswahl der Substratmaterialien richtet sich in erster Linie nach dem Verwendungszweck der aus den erfindungsgemäßen Filmen hergestellten Schichtelemente. Für optische Elemente werden in der Regel transparente, lichtdurchlässige Substrate als Schichtträger eingesetzt. Werden die erfindungsgemäßen Schichtelemente beispielsweise in der Elektrotechnik oder bei elektrochemischen Prozessen verwendet, dienen als Substrate insbesondere elektrisch leitfähige Materialien, wie Metalle oder metallische Oberflächenschichten, beispielsweise auf Kunststoffolien.

Die als Träger für die erfindungsgemäßen Filme dienenden Substrate können, je nach Verwendungszweck, beliebige Formen aufweisen. Beispielsweise können sie film-, folien-, platten-, bandförmig oder auch zylinderförmig sein oder unter anderen beliebigen Formen ausgewählt werden. Im allgemeinen wird es sich bei den Schichtträgern um flache, ebene Substrate handeln, wie z. B. Filme, Folien, Platten, Bänder und dergleichen. Die zu beschichtende Oberfläche der Substrate ist vorzugsweise glatt, wie es für die Herstellung von LB-Filmen üblich ist. Bei flachen, ebenen Substraten können die erfindungsgemäßen Filme auf eine oder beide Oberflächen des Substrats aufgebracht werden.

Charakteristisch für die Langmuir-Blodgett Technik ist, daß wasserunlösliche Moleküle (vorwiegend amphiphile Monomer-/Polymersubstanzen) aus einer Lösung (Konzentration: 1 mg/ml) auf die Wasseroberfläche gespreitet werden. Das Lösungsmittel verdampft; durch Kompression wird ein geordneter zweidimensionaler Film aufgebaut. Sukzessives Tauchen eines Substrates (z. B. Silizium) durch die Wasser-Luft Grenzfläche ermöglicht den Aufbau von Multischichten definierter Dicke mit einem Dickeninkrement von ca. 2 - 6 nm.

Die eingesetzten polymeren amphiphilen Verbindungen führen im Vergleich zu den klassischen niedermolekularen amphiphilen Verbindungen wie Omega-Tricosensäure oder Arachidinsäure zu Filmen mit besserer Übertragbarkeit, geringerer Defektdichte und hoher thermischer Stabilität.

Die Fulleren-Polymer Mischschichten können insbesondere mit der in LB-Technik üblichen Y-Beschichtung auf Substrate übertragen werden.

Sofern die erfindungsgemäßen Schichtelemente einen lichtdurchlässigen Träger enthalten, eignen sie sich als optische Begrenzer, da in den Fullerenschichten die Lichtdurchlässigkeit mit steigendem Lichtstrom abnimmt.

Sofern die erfindungsgemäßen Schichtelemente einen elektrisch leitfähigen Träger aufweisen (z. B. eine ITO-Schicht auf einen Träger aufgedampft), so können sie zur Herstellung von Leuchtdioden eingesetzt werden. Nach Anbringen einer Deckelektrode auf der obersten Schicht und Anlegen einer Spannung zwischen Träger und Elektrode können die Fulleren enthaltenden Schichten zur Aussendung elektrolumineszenter Strahlung veranlaßt werden.

Die Erfindung wird durch die folgenden Beispiele näher erläutert:

Beispiel 1

Es wurde zunächst das Monomere der allgemeinen Formel I mit k = 0, synthetisiert, wobei $R^2$ eine n-Octadecyl-Gruppe und $R^3$ eine Äthylgruppe war. Durch Homopolymerisation entstand daraus das Polymere der Formel (II).

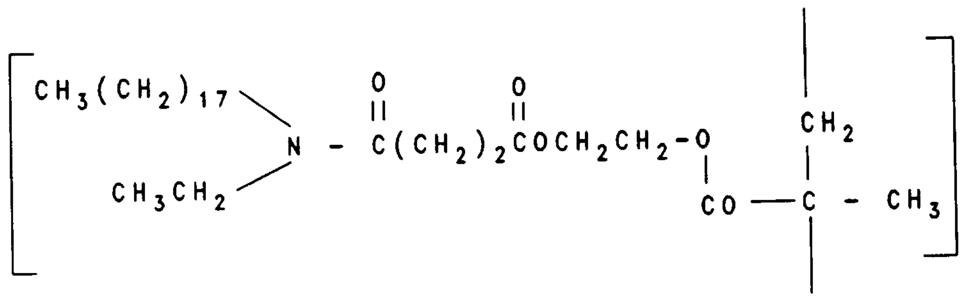

II

Figur 1 zeigt die Isothermen von Mischungen von II mit Fullerenen (75 Gew.-% $C_{60}$, 25 Gew.-% $C_{70}$) im Gewichtsverhältnis II/Fulleren von 3:1 ("2") und 1:1 ("3"). Die Isotherme 1 entspricht der reinen Verbindung II, die Isotherme 4 entspricht reinem Fulleren. Man kann deutlich den zunehmenden Einfluß des Polymers (II) am Verlauf der Isothermen bei gleichzeitig abnehmendem Fullerenanteil erkennen.

Beispiel 2

Figur 2 zeigt die Absorptionsspektren eines Mischfilms aus 50 Gew.-% Polymer II und 50 Gew.-% Fulleren der übertragenen Schicht für verschiedene Schichtdicken. Die Schichtdicken betragen 40nm, 100nm und 200nm, was 20, 50 und 100 Monolagen entspricht.

Die Zunahme der Absorption mit zunehmender Dicke ist ein Maß für die Beschichtungsqualität der Multilagenfilme. Der lineare Zusammenhang der Absorption aller drei Banden im UV bei 340, 265 und 220nm mit der Filmdicke ist gut erfüllt. Dies zeigt, daß die Beschichtung reproduzierbar durchgeführt werden kann und die mikroskopische Umgebung der Fullerenmoleküle im L-B Film mit zunehmender Monolagenzahl unverändert bleibt.

Figur 3 zeigt die Absorptionsspektren eines Mischfilms mit jeweils 50 Monolagen für verschiedene Fullerenkonzentrationen. Die Absorption wächst mit zunehmendem Fullerengehalt stärker als linear an. Dies ist auf eine Zunahme der Monolagenschichtdicke mit steigendem Fullerenanteil zurückzuführen.

Fig. 5 zeigt die Zunahme der Schichtdicke ($d_{ML}$) einer Monolage in Abhängigkeit von der Fullerenkonzentration ermittelt aus Messungen zur Röntgenkleinwinkelstreuung.

Beispiel 3

Es wurden Messungen zur Frequenzverdreifachung an Proben mit 0, 10, 30, 50 und 70 Gew.-% Fullerenanteil in der übertragenen Schicht durchgeführt. Der Rest bestand aus Polymer II. Verwendet wurde die Fullerenmischung von Beispiel 1. In zentrosymmetrischen Materialien wie dem Buckminsterfulleren wird die induzierte Polarisation beschrieben durch

$$P = \epsilon_0 \chi^{(3)} E^3$$

wobei $\chi^{(3)}$ die nichtlineare Suszeptibilität 3. Ordnung, E das angelegte elektrische Feld des Laserpulses und $\epsilon_0$ die elektrische Feldkonstante ist. Der experimentelle Aufbau einer Apparatur zur Bestimmung der nichtlinearen Suszeptibilität 3. Ordnung ist dem Fachmann bekannt, z. B. aus P.N. Prasad, D.J. Williams, Introduction to Nonlinear Optical Effects in Molecules and Polymers, John Wiley, 1991, S. 202.

Das harmonische Signal wurde in Transmission als Funktion des Drehwinkels der Probe relativ zur Strahlachse aufgenommen. Der parallel aufgebaute Referenzzweig dient zum Ausgleich der Puls-zu-Puls-Schwankungen der Laserintensität. Die Skalierung der harmonischen Intensität erfolgt mittels Messung des Quarzglassubstrates ohne Film.

Für eine exakte Ermittlung der nichtlinear optischen Suszeptibilitäten ist die Kenntnis des Brechungsindex bei der fundamentalen und harmonischen Frequenz nötig. Die Schichtdicke wurde durch Röntgenkleinwinkelstreuung bestimmt. Sie steigt mit zunehmendem Fullerenanteil (vgl. Fig. 5). Da die Brechungsindices bei 1064nm und 154nm direkt schwer zugänglich sind, wurde eine Kramers-Kronig Analyse durchgeführt. Mit dieser Methode ist es möglich, aus dem Absorptionsspektrum auf den Brechungsindex zu schließen, sofern der Brechungsindex bei einer Frequenz z. B. ellipsometrisch bei 633nm bestimmt wurde (Rest: Polymer II). Figur 4 zeigt die Abhängigkeit des $\chi^{(3)}$-Koeffizienten aus Dreiphotonenresonanz von dem Fullerenanteil.

Die $\chi^{(3)}$-Koeffizienten sind mit einem Fehler von ca. 10 % behaftet und liegen innerhalb der Fehlergrenzen auf einer Geraden in Übereinstimmung mit dem theoretisch zu erwartenden Verlauf. Aus der Extrapolation auf 100 Gewichtsprozent erhält man für den $\chi^{(3)}$-Wert der reinen Fullerenschicht $2*10^{-10}$ esu.

## Patentansprüche

1. Verfahren zur Herstellung eines Schichtelements, wobei man ein Gemisch aus einem Fulleren und einer amphiphilen Verbindung auf einer Wasseroberfläche spreitet und nach dem Verfahren nach Langmuir-Blodgett auf einen Schichtträger überträgt, dadurch gekennzeichnet, daß man als amphiphile Verbindung eine polymere Verbindung einsetzt.

2. Verfahren nach Anspruch 1, dadurch gekennzeichnet, daß als polymere Verbindung ein Polymethacrylsäureester-Derivat eingesetzt wird.

3. Verfahren nach Anspruch 2, dadurch gekennzeichnet, daß das Polymethacrylsäureester-Derivat sich ableitet von einem Monomeren der allgemeinen Formel I,

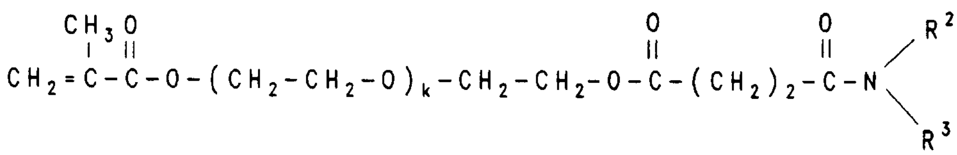

(I)

wobei
k eine ganze Zahl von O bis 10,
$R^2$ eine $C_1$-$C_{24}$-Alkyl-gruppe und
$R^3$ eine $C_8$-$C_{24}$-Alkylgruppe bedeutet, mit der Maßgabe, daß die Gruppen $R^2$ und $R^3$ eine unterschiedliche Anzahl von C-Atomen enthalten.

4. Verfahren nach Anspruch 1, dadurch gekennzeichnet, daß man ein Gemisch einsetzt, das mindestens 40 Gew.-% Fulleren enthält.

5. Verfahren nach Anspruch 3, dadurch gekennzeichnet, daß man als amphiphile Verbindung ein Polymethacrylsäureester-Derivat einsetzt, das sich ableitet von einem Monomeren der allgemeinen Formel I und, daß das Gemisch das 55-70 Gew.-% Fulleren enthält.

6. Schichtelement enthaltend auf einem festen Sichtträger mindestens eine monomolekulare regelmäßig angeordnete Schicht aus einem amphiphilen Molekül mit einem Gehalt an einem Fulleren, dadurch gekennzeichnet, daß das amphiphile Molekül eine polymere Verbindung, insbesondere ein Polymethacrylsäureester-Derivat darstellt.

7. Verwendung des Schichtelements gemäß Anspruch 6 zur optischen Frequenzverdreifachung.

8. Verwendung des Schichtelements gemäß Anspruch 6 als optischer Begrenzer.

9. Verwendung des Schichtelements gemäß Anspruch 6 als Leuchtdiode.

10. Verfahren nach Anspruch 1, dadurch gekennzeichnet, daß man ein Gemisch aus einem Fulleren und einer amphiphilen Verbindung in einem flüchtigen organischen Lösemittel löst, die Lösung auf der Wasseroberfläche spreitet, das organische Lösemittel verflüchtigt, den zurückbleibenden Film komprimiert und man durch senkrechtes Eintauchen und/oder Austauchen eines festen Trägers durch die Wasseroberfläche eine monomolekulare Schicht auf den Träger überträgt.

11. Schichtelement nach Anspruch 6, dadurch gekennzeichnet, daß die monomolekulare regelmäßig angeordnete Schicht jeweils eine Schichtdicke von 2 bis 6 nm besitzt.

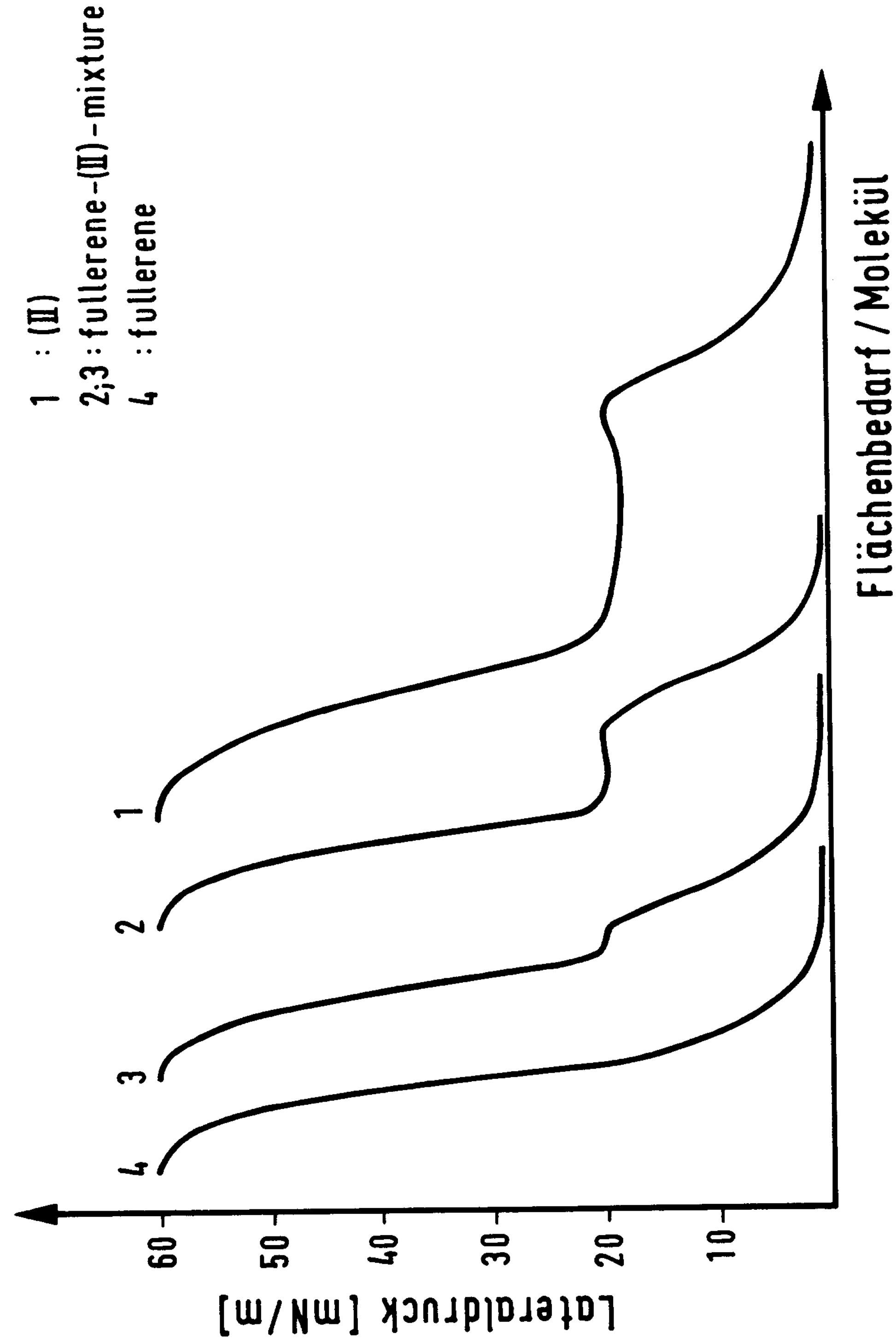
1 : (II)
2;3 : fullerene-(II)-mixture
4 : fullerene
Lateraldruck [mN/m]
60
50
40
30
20
10
Flächenbedarf / Molekül
1
2
3
4

Fig. 1

Fig. 2

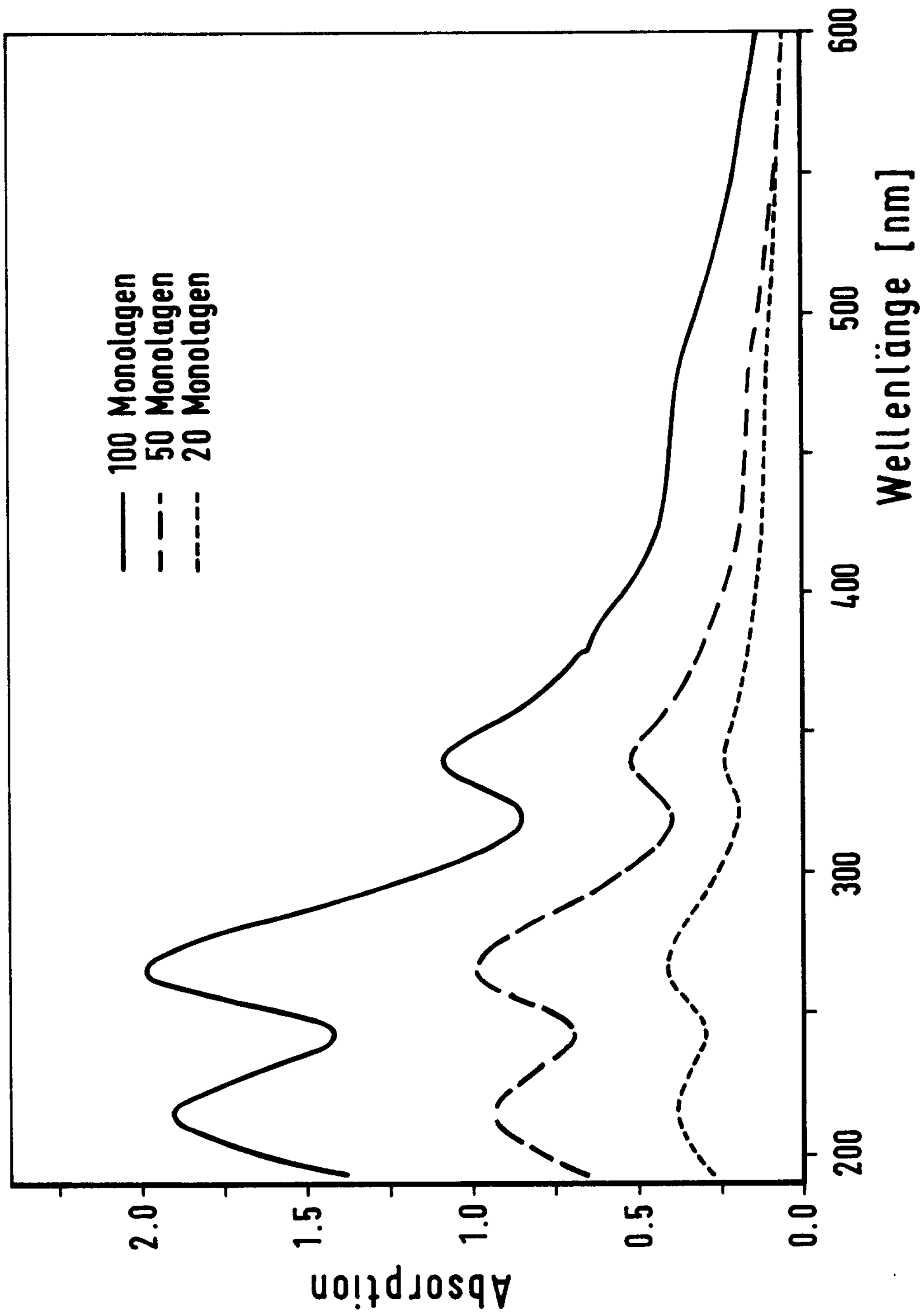
100 Monolagen
50 Monolagen
20 Monolagen
Absorption
0.0
0.5
1.0
1.5
2.0
200
300
400
500
600
Wellenlänge [nm]

Fig. 3

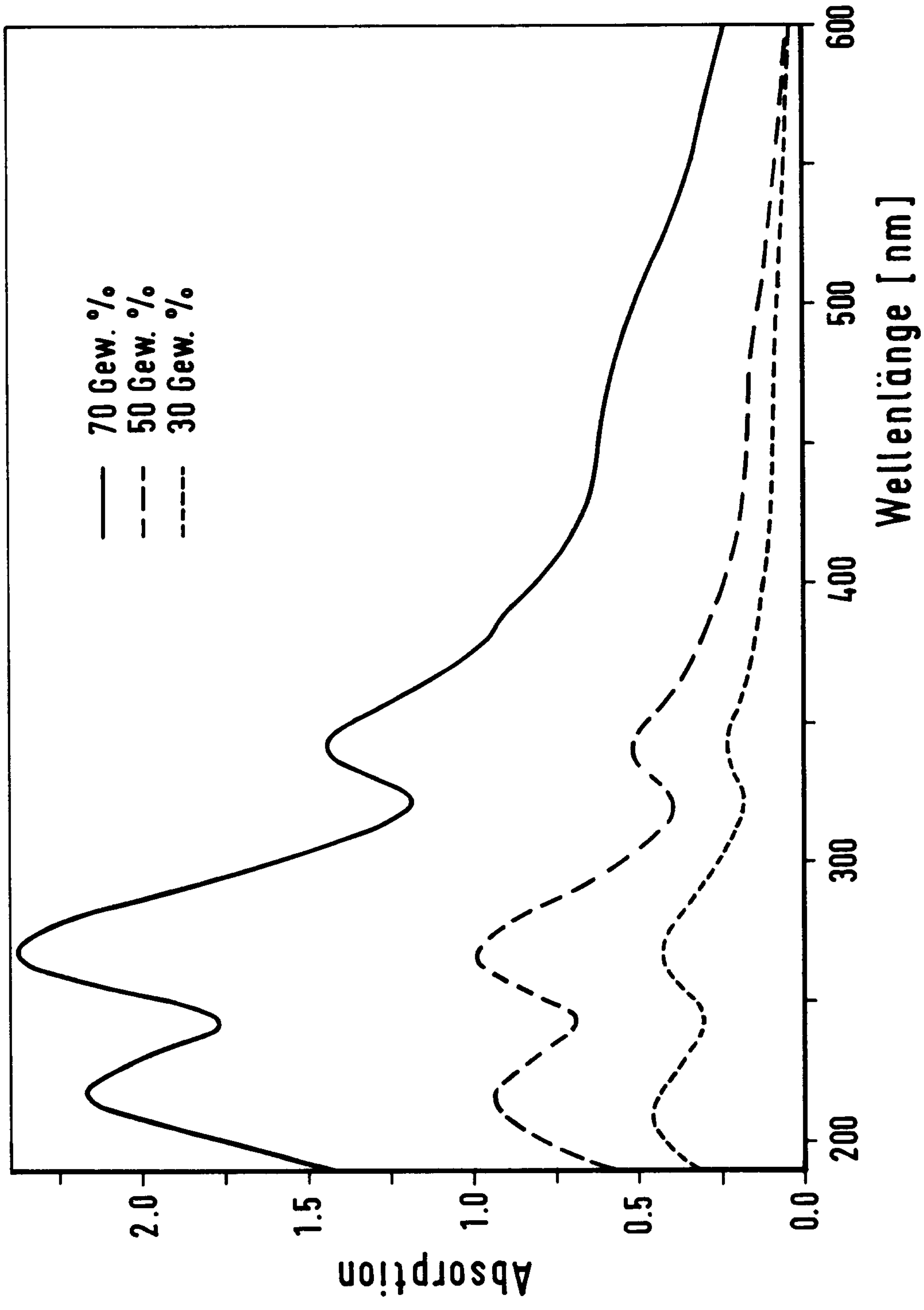

70 Gew. %
50 Gew. %
30 Gew. %
Absorption
0.0
0.5
1.0
1.5
2.0
200
300
400
500
600
Wellenlänge [nm]

Fig. 4

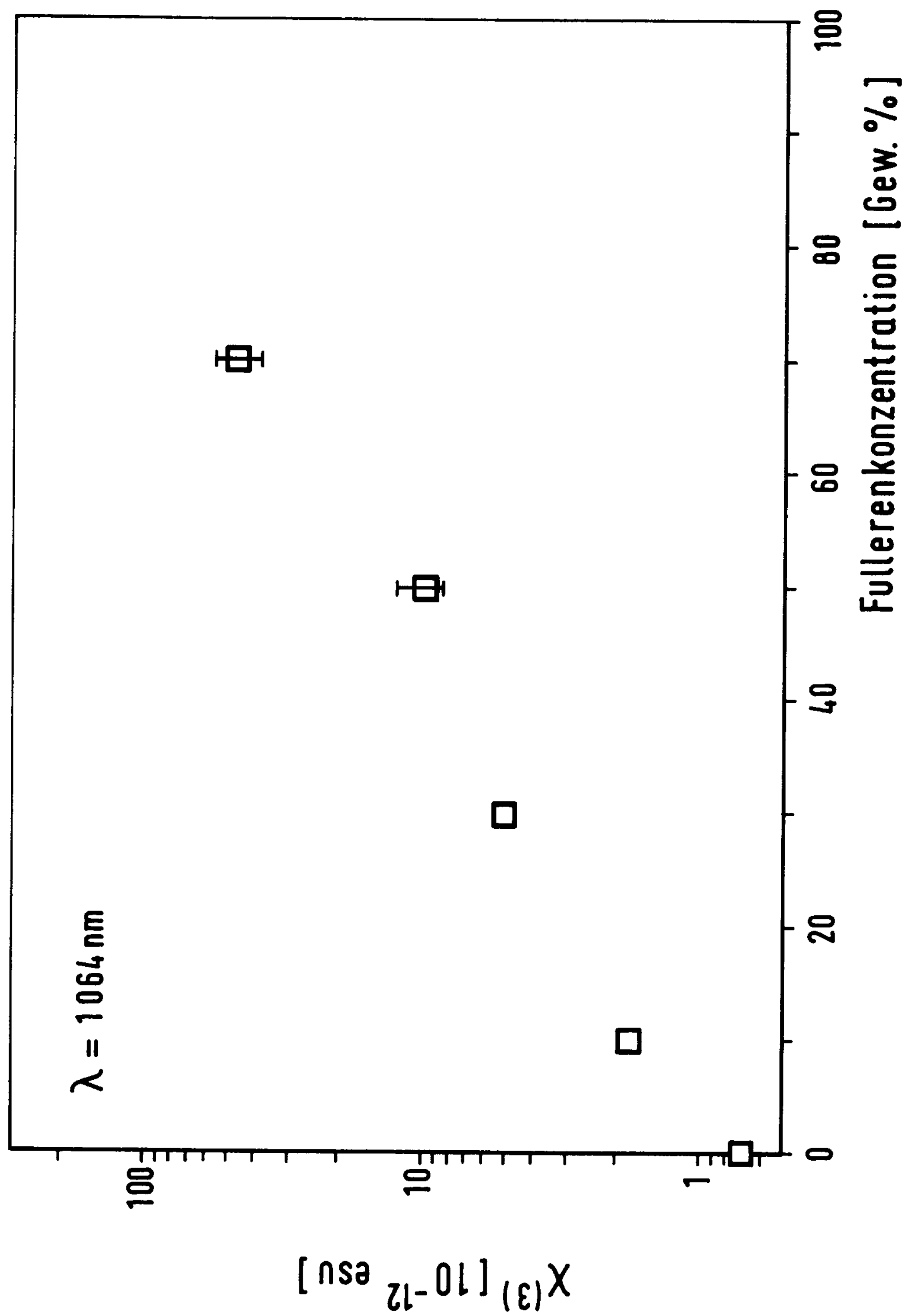
λ = 1064 nm
Fullerenkonzentration [Gew. %]
χ(3) [10-12 esu]
0
20
40
60
80
100
1
10
100

Fig. 5

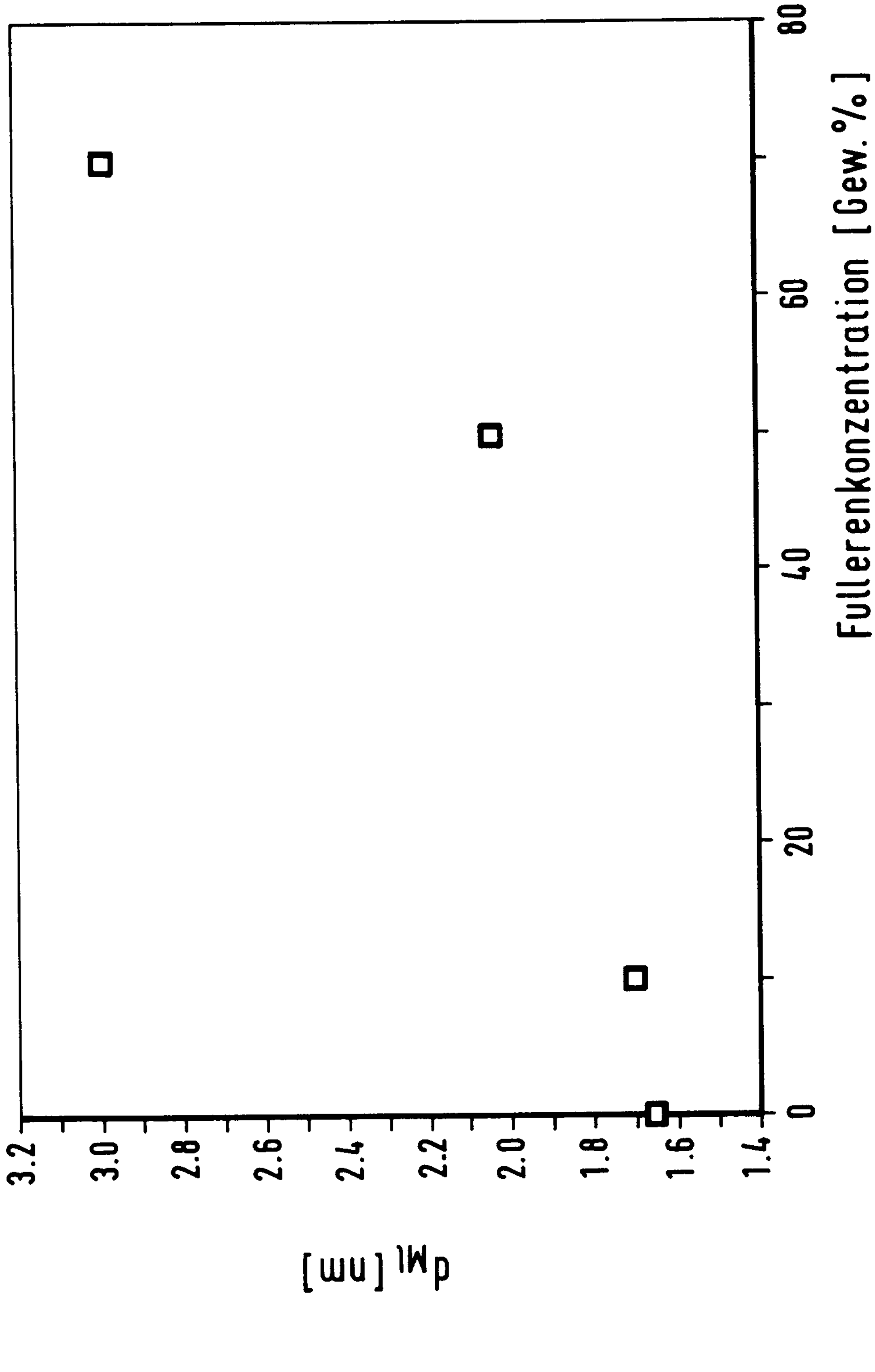

$d_{Ml}$ [nm]
3.2
3.0
2.8
2.6
2.4
2.2
2.0
1.8
1.6
1.4
0
20
40
60
80
Fullerenkonzentration [Gew.%]

Europäisches Patentamt

# EUROPÄISCHER RECHERCHENBERICHT

Nummer der Anmeldung: EP 93112158.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| P,A | EP - A - 0 538 864 (HUGHES AIRCRAFT COMPANY) * Ansprüche; Spalte 1, Zeilen 26-46 * -- | 1,4,6, 8,10, 11 | B 32 B 27/28<br>B 32 B 27/30<br>G 02 B 1/10<br>G 02 F 1/35<br>G 02 F 2/02 |
| D,A | LANGMUIR, Band 8, Nr. 1, Jänner 1992, American Chemical Society T. NAKAMURA et al. "Formation of Langmuir-Blodgett Films of a Fullerence" Seiten 4-6 * Gesamt * -- | 1,4,6, 10 | |
| D,A | EP - A - 0 432 619 (HOECHST AKTIENGESELLSCHAFT) * Ansprüche * ---- | 1,10 | |

RECHERCHIERTE SACHGEBIETE (Int Cl 5)

B 32 B
G 02 B
G 02 F

Der vorliegende Recherchenbericht wurde für alle Patentansprüche erstellt.

| Recherchenort | Abschlußdatum der Recherche | Prüfer |
|---|---|---|
| WIEN | 09-11-1993 | WEIGERSTORFE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82